# EUROPÄISCHE PATENTSCHRIFT

(11) **EP 0 877 776 B1**
(45) Veröffentlichungstag und Bekanntmachung des Hinweises auf die Patenterteilung: **17.10.2001**
(21) Anmeldenummer: 97902200.1
(22) Anmeldetag: 22.01.1997
(51) Int. Cl.: C09B 67/02, C09B 67/42, C09K 19/00, C09K 19/52, B29C 35/00, B01J 2/12, B01J 2/26, B29B 9/10

(54) **VERFAHREN ZUR HERSTELLUNG VON PIGMENTPARTIKELN**
PROCESS FOR PRODUCING PIGMENT PARTICLES
PROCEDE DE PRODUCTION DE PARTICULES DE PIGMENTS

(30) Priorität: 26.01.1996 DE 19602795
(43) Veröffentlichungstag der Anmeldung: 18.11.1998
(73) Patentinhaber: BASF AKTIENGESELLSCHAFT, 67056 Ludwigshafen (DE)
(72) Erfinder: SCHUHMACHER, Peter, D-68163 Mannheim (DE); FAUST, Tillmann, D-67256 Weisenheim (DE); SIEMENSMEYER, Karl, D-67227 Frankenthal (DE); OSTERTAG, Werner, D-67269 Grünstadt (DE); SCHMIDT, Hans-Werner, D-95444 Bayreuth (DE); GIESA, Reiner, D-95445 Bayreuth (DE)
(86) Internationale Anmeldenummer: EP9700280
(87) Internationale Veröffentlichungsnummer: WO9727251

(56) Entgegenhaltungen:
- WO-A-96/02597
- DE-A- 4 418 076
- FR-A- 2 126 733
- GB-A- 2 239 872
- US-A- 3 048 464
- US-A- 5 364 557

## Beschreibung

Gegenstand der Erfindung ist ein Verfahren zur Herstellung von Pigmentpartikeln, dadurch gekennzeichnet, daß man eine polymerisierbare Mischung, welche einen Farbstoff oder ein Interferenzfarbmittel enthält, entweder auf eine mit Vertiefungen in der Form der gewünschten Pigmentpartikel versehene Oberfläche aufträgt, die Mischung zur Polymerisation bringt und anschließend die polymerisierten Pigmentpartikel aus den Vertiefungen entfernt, oder auf eine glatte Oberfläche in der Form der gewünschten Pigmentpartikel, wobei diese Form in bekannter Weise durch ein Druckverfahren vorgegeben wird, aufträgt, die Mischung zur Polymerisation bringt und anschließend die polymerisierten Pigmentpartikel von der Oberfläche entfernt, ausgenommen die Herstellung von Pigmentpartikeln mit cholesterisch-flüssigkristalliner Ordnungsstruktur durch Offsetdruck.

Weiterhin ist Gegenstand der Erfindung eine Vorrichtung zur Herstellung von Pigmentpartikeln, neue Pigmentpartikel, erhältlich nach dem o.g. Verfahren und Überzugsmittel, enthaltend die neuen Pigmentpartikel.

Pigmente werden üblicherweise durch Fällungsreaktionen oder durch mechanisches Zerkleinern größerer Farbkörper hergestellt. Bei diesen Methoden der Pigmentherstellung entstehen Pigmentpartikel unterschiedlicher Form und Größe.

Ebenso gilt dies für die Herstellung von plättchenförmigen Pigmenten auf Basis von cholesterisch-flüssigkristallinen Materialien. In den Schriften US 5,364,557 und DE-A-44 18 076 werden beispielsweise Polymerschichten mit cholesterisch-flüssigkristalliner Ordnungsstruktur mechanisch zerkleinert. Auch hier resultieren dementsprechend Pigmentpartikel unterschiedlicher Form und Größe.

In der deutschen Offenlegungsschrift 19532419 wird ein Verfahren zur Herstellung von Pigmenten mit cholesterisch-flüssigkristalliner Ordnungsstruktur durch Offsetdruck beschrieben. Nach diesem Verfahren ist es möglich, Pigmentpartikel einheitlicher Form zu erhalten. In dem Dokument wird jedoch kein Hinweis auf die Herstellung von Pigmenten mittels anderer Druckverfahren sowie auf die Herstellung anderer als flüssigkristalliner Pigmente gegeben.

Für die Herstellung hochwertiger Pigmentlacke, besonders für solche, deren Farbeindruck auf Interferenzeffekten beruht, ist es vorteilhaft, Pigmentpartikel definierter einheitlicher Form und Größe zu verwenden.

Der vorliegenden Erfindung lag daher die Aufgabe zugrunde, ein Verfahren zur Herstellung von Pigmentpartikeln definierter Form zu finden.

Demgemäß wurde das eingangs beschriebene Verfahren gefunden.

Bei dem erfindungsgemäßen Herstellungsverfahren geht man von einer polymerisierbaren Mischung aus. Diese polymerisierbare Mischung kann z.B. organische oder anorganische Farbstoffe enthalten. Entweder sind diese Farbstoffe selbst polymerisierbar, beispielsweise durch polymerisierbare Seitenketten an den Chromophoren, oder die Farbstoffe werden mit einem polymerisierbaren Bindemittel vermischt, so daß sie in ein polymeres Netzwerk eingeschlossen werden. Die Wahl des Farbstoffes hängt dabei von der späteren Verwendung des Pigmentes ab. Prinzipiell sind alle Farbstoffe in dem erfindungsgemäßen Verfahren einsetzbar. Vorteilhaft ist der Einsatz von Farbstoffen, die entweder unlöslich sind oder die kovalent in das polymere Netzwerk eingebaut werden können.

Geeignete Farbstoffe werden im folgenden näher beschrieben.

Geeignete Azofarbstoffe sind insbesondere Mono- oder Disazofarbstoffe, z.B. solche mit einer Diazokomponente, die sich von einem Anilin oder von einem fünfgliedrigen aromatischen heterocyclischen Amin ableitet, das ein bis drei Heteroatome, ausgewählt aus der Gruppe, bestehend aus Stickstoff, Sauerstoff und Schwefel, im heterocyclischen Ring aufweist und durch einen Benzol-, Thiophen-, Pyridin- oder Pyrimidinring anelliert sein kann.

wichtige Mono- oder Disazofarbstoffe sind beispielsweise solche, deren Diazokomponente sich z.B. von einem Anilin oder von einem heterocyclischen Amin aus der Pyrrol-, Furan-, Thiophen-, Pyrazol-, Imidazol-, Oxazol-, Isoxazol-, Thiazol-, Isothiazol-, Triazol-, Oxadiazol-, Thiadiazol-, Benzofuran-, Benzthiophen-, Benzimidazol-, Benzoxazol-, Benzthiazol-, Benzisothiazol-, Pyridothiophen-, Pyrimidothiophen-, Thienothiophen- oder Thienothiazolreihe ableitet.

Besonders zu nennen sind solche Diazokomponenten, die von einem Anilin oder von einem heterocyclischen Amin aus der Pyrrol-, Thiophen-, Pyrazol-, Thiazol-, Isothiazol-, Triazol-, Thiadiazol-, Benzthiophen-, Benzthiazol-, Benzisothiazol-, Pyridothiophen-, Pyrimidothiophen-, Thienothiophen- oder Thienothiazolreihe stammen.

von Bedeutung sind weiterhin Azofarbstoffe mit einer Kupplungskomponente aus der Anilin-, Aminonaphthalin-, Aminothiazol-, Diaminopyridin- oder Hydroxypyridonreihe.

Die Monoazofarbstoffe sind an sich bekannt und in großer Zahl beschrieben, z.B. in K. Venkataraman "The Chemistry of Synthetic Dyes", Vol. VI, Academic Press, New York, London, 1972, oder in der EP-A-201 896.

Ferner sind Anthrachinon-, Cumarin-, Methin- und Azamethin- sowie Chinophthalonfarbstoffe vorteilhaft zu verwenden.

Geeignete Anthrachinonfarbstoffe sind z.B. in D.R. Waring, G. Hallas "The Chemistry and Application of Dyes", Seiten 107 bis 118, Plenum Press, New York, London, 1990, beschrieben.

Geeignete Cumarinfarbstoffe sind z.B. in Ullmanns Encyklopädie der technischen Chemie, 4. Auflage, Band 17, Seite 469, beschrieben.

Geeignete Methin- oder Azamethinfarbstoffe sind z.B. in der US-A-5 079 365 sowie WO-A-9219684 beschrieben.

Geeignete Chinophthalonfarbstoffe sind z.B. in der EP-83 553 beschrieben.

Unter Polymerisation ist jede Art von Aufbaureaktion von Polymeren zu verstehen, also Additionspolymerisationen als Kettenreaktionen, Additionspolymerisationen als Stufenreaktionen sowie Kondensationspolymerisationen.

Neben den Farbstoffen oder Interferenzfarbmitteln kann die polymerisierbare Mischung verschiedene in der Lack- oder Druckfarbentechnik übliche Zusätze wie polymerisierbare Bindemittel, Reaktivverdünner, Dispergierhilfsmittel, polymere Bindemittel, Füllstoffe, Verdünnungsmittel sowie Polymerisationsinitiatoren enthalten.

Besonders geeignete Zusätze sind polymere Bindemittel und/oder monomere Verbindungen, die durch Polymerisation in ein polymeres Bindemittel überführt werden können. Als solche Mittel eignen sich z.B. in organischen Lösungsmitteln lösliche Polyester, Celluloseester, Polyurethane, Silikone sowie polyether- oder polyestermodifizierte Silikone. Besonders bevorzugt werden Celluloseester wie Celluloseacetobutyrat eingesetzt.

Besonders geeignet sind solche polymeren Bindemittel, die reaktive vernetzungsfähige Gruppen wie Acryl-, Methacryl-, α-Chloracryl-, Vinyl-, Vinylether-, Epoxid-, Cyanat-, Isocyanat- oder Isothiocyanatgruppen enthalten. Auch monomere Mittel eignen sich als Bindemittel, besonders die in der Lackherstellung bekannten sogenannten Reaktivverdunner, wie beispielsweise Hexandioldiacrylat oder Bisphenol-A-diacrylat. Schon geringe Mengen solcher Substanzen - meist schon 0,1 bis 1 Gew.-% - bewirken eine beträchtliche Verbesserung der Fließviskosität. Gleichzeitig haben diese Mittel einen großen Einfluß auf die mechanischen Eigenschaften der gehärteten Pigmentpartikel.

Als Lösung- oder Verdünnungsmittel kommen beispielsweise Ester, besonders Essigsäureester, Alkohole, Lactone, aliphatische und aromatische Kohlenwasserstoffe, Amide, N-Alkylpyrrolidone, besonders N-Methylpyrrolidon sowie Tetrahydrofuran und Dioxan in Betracht. Auch Wasser läßt sich teilweise vorteilhaft als Verdünnungsmittel einsetzen.

Weiterhin können die polymerisierbaren Mischungen Polymerisationsinitiatoren enthalten, die entweder thermisch oder photochemisch zerfallen und so die Härtung des Lacks bewirken. Dabei sind unter den thermischen Polymerisationsinitiatoren solche bevorzugt, die zwischen 20 und 180°C, besonders bevorzugt zwischen 50 und 80°C zerfallen und die Polymerisation initiieren. Zur photochemischen Härtung sind im Prinzip alle Photoinitiatoren verwendbar. Insbesondere kommen auch Gemische verschiedener Initiatoren zum Einsatz, um die Durchhärtung zu verbessern. Als gut geeignete Photoinitiatoren kommen z.B. Benzophenon und dessen Derivate, wie Alkylbenzophenone, halogenmethylierte Benzophenone oder 4,4'-Bis(dimethylamino)-benzophenon sowie Benzoin und Benzoinether wie Ethyl-benzoinether, Benzilketale wie Benzildimethylketal, Acetophenonderivate, wie Hydroxy-2-methyl-1-phenylpropan-1-on und Hydroxycyclohexylphenylketon zum Einsatz. Ganz besonders gut geeignet sind Acylphosphinoxide wie 2,4,6-Trimethylbenzoyldiphenylphosphinoxid. Unter den photochemisch aktivierbaren Polymerisationsinitiatoren werden bevorzugt solche eingesetzt, die keine vergilbende Wirkung zeigen.

Besonders bevorzugte Polymerisationsinitiatoren sind auch Boralkylverbindungen sowie Peroxide wie Dibenzoylperoxid und Di-tert.-butyl-peroxid.

Die Photoinitiatoren, die je nach Verwendungszweck der erfindungsgemäßen Pigmente vorteilhaft in Mengen zwischen 0,01 und 15 Gew.-%, bezogen auf die polymerisierbaren Komponenten, eingesetzt werden, können als einzelne Substanzen oder, wegen vorteilhafter synergistischer Effekte, auch in Kombination miteinander verwendet werden.

Für kationische Polymerisationen werden bevorzugt Initiatoren eingesetzt, welche geladene Strukturen aufweisen. Insbesondere kommen Substanzen zum Einsatz, welche, z.T. in Kombination mit Acylphosphinoxiden eingesetzt werden, z.B: 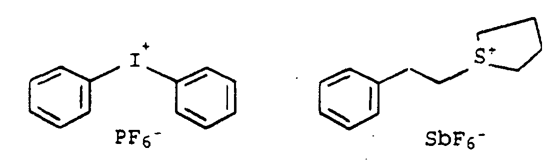 sowie Derivate dieser Verbindungen.

Gewünschtenfalls können den polymerisierbaren Mischungen auch Stabilisatoren gegen UV- und Wettereinflüsse zugesetzt werden. Hierfür eignen sich z.B. Derivate des 2,4-Dihydroxybenzophenons, Derivate des 2-Cyan-3,3-diphenylacrylates, Derivate des 2,2', 4,4'-Tetrahydroxybenzophenons, Derivate des Orthohydroxyphenylbenztriazols, Salicylsäureester, Ortohydroxyphenyl-S-triazine oder sterisch gehinderte Amine. Diese Stoffe können allein oder vorzugsweise in Form von Gemischen eingesetzt werden.

Als Füllstoffe kommen z.B. Rutil, Anatas, Kreide, Talkum und Bariumsulfat in Betracht.

Dispergierhilfsmittel haben einen positiven Einfluß auf die Fließviskosität der polymerisierbaren Mischung und auf die Mischbarkeit der einzelnen Mischungskomponenten. Als Dispergierhilfsmittel können alle handelsüblichen Mittel eingesetzt werden.

Besonders geeignete Dispergierhilfsmittel sind solche, die auf einer Bernsteinsäureimid-, -ester- oder -anhydridstruktur basieren, wie sie in der älteren deutschen Patentanmeldung 19532419.6 beschrieben sind.

Die polymerisierbare Mischung, kann Farbstoffe und/oder Interferenzfarbmittel enthalten. Da an die Form solcher Interferenzpigmente besonders hohe Ansprüche gestellt werden, ist das erfindungsgemäße Verfahren zur Herstellung solcher Pigmente besonders geeignet.

Besonders interessante Interferenzfarbmittel sind cholesterische, flüssigkristalline Zusammensetzungen.

Cholesterisch-flüssigkristalline Phasen können entweder durch chirale flüssigkristalline Verbindungen aufgebaut werden oder durch achirale flüssigkristalline Verbindungen, die mit geeigneten chiralen Dotierstoffen versetzt werden.

Die im erfindungsgemäßen Herstellverfahren eingesetzten cholesterisch-flüssigkristallinen Zusammensetzungen enthalten bevorzugt folgende Komponenten:
a) mindestens ein chirales flüssigkristallines polymerisierbares Monomeres oder
b) mindestens ein achirales flüssigkristallines polymerisierbares Monomers und eine chirale Verbindung.

Besonders geeignet sind dabei jeweils solche Komponenten, die über reaktive Gruppen in ein polymeres Netzwerk überführt oder eingebaut werden können.

Als unter a) genannte chirale flüssigkristalline polymerisierbare Monomere eignen sich besonders solche der allgemeinen Formel I 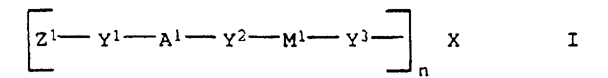 wobei die Variablen die folgende Bedeutung haben:
- Z¹: eine polymerisierbare Gruppe oder ein Rest, der eine polymerisierbare Gruppe trägt,
- Y¹, Y², Y³: chemische Bindungen, Sauerstoff, Schwefel,

―CO―O―,

―O―CO―,

―O―CO―O―,

―CO―N(R)―

oder

―N(R)―CO―,
- A¹: ein Spacer,
- M¹: eine mesogene Gruppe,
- x: ein n-wertiger chiraler Rest,
- R: Wasserstoff oder C₁-C₄-Alkyl,
- n: 1 bis 6

wobei die Reste Z¹, Y¹, Y², Y³, A¹ und M¹, gleich oder verschieden sein können.

Bevorzugte Reste Z¹ sind:

H₂C=CH-,

HC ≡ C- ,

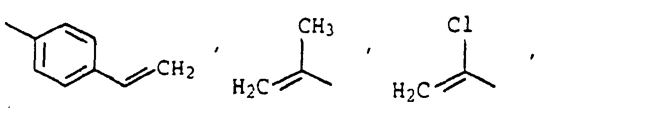

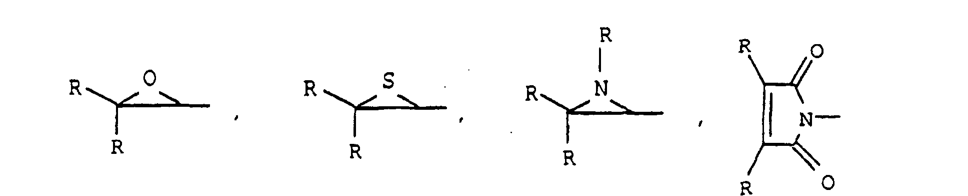

―N=C=O,

―N=C=S,

―O―C≡N,

―COOH,

―OH

oder

― NH₂,

wobei die Reste R gleich oder verschieden sein können und Wasserstoff oder C¹-C⁴-Alkyl wie Methyl, Ethyl, Propyl, Isopropyl, n-Butyl, iso-Butyl, sec.-Butyl oder tert.-Butyl bedeuten. Von den reaktiven polymerisierbaren Gruppen können die Cyanate spontan zu Cyanuraten trimerisieren und sind daher bevorzugt zu nennen. Die anderen genannten Gruppen benötigen zur Polymerisation weitere Verbindungen mit komplementären reaktiven Gruppen. So können beispielsweise Isocyanate mit Alkoholen zu Urethanen und mit Aminen zu Harnstoffderivaten polymerisieren. Analoges gilt für Thiirane und Aziridine. Carboxylgruppen können zu Polyestern und Polyamiden kondensiert werden. Die Maleinimidogruppe eignet sich besonders zur radikalischen Copolymerisation mit olefinischen Verbindungen wie Styrol. Die komplementären reaktiven Gruppen können dabei entweder in einer zweiten erfindungsgemäßen Verbindung vorhanden sein, die mit der ersteren gemischt wird, oder sie können durch Hilfsverbindungen, die 2 oder mehr dieser komplementären Gruppen enthalten, in das polymere Netzwerk eingebaut werden.

Y¹-Y³ haben die eingangs genannte Bedeutung, wobei unter einer chemischen Bindung eine kovalente Einfachbindung zu verstehen ist.

Besonders bevorzugte Gruppierungen Z¹-Y¹ sind Acrylat und Methacrylat.

Als Spacer A¹ kommen alle für diesen Zweck bekannten Gruppen in Betracht. Die Spacer enthalten in der Regel 2 bis 30, vorzugsweise 2 bis 12 C-Atome und bestehen aus linearen aliphatischen Gruppen. Sie können in der Kette z.B. durch O, S, NH oder NCH₃ unterbrochen sein, wobei diese Gruppen nicht benachbart sein dürfen. Als Substituenten für die Spacerkette kommen dabei noch Fluor, Chlor, Brom, Cyan, Methyl oder Ethyl in Betracht.

Repräsentative Spacer sind beispielsweise:

- (CH₂)ₚ-,

-(CH₂CH₂O)ₘCH₂CH₂-,

-CH₂CH₂SCH₂CH₂-,

-CH₂CH₂NHCH₂CH₂-,

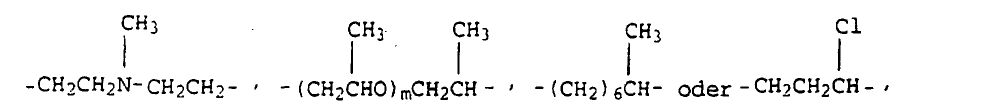

wobei
m 1 bis 3 und
p 1 bis 12 sind.

Die mesogene Gruppe M¹ hat vorzugsweise die Struktur

(T-Y⁸)_{S}-T

wobei Y⁸ ein Brückenglied ausgewählt aus den Definitionen von Y¹, s eine Zahl von 1 bis 3 und T gleiche oder verschiedene zweiwertige isocycloaliphatische, heterocycloaliphatische, isoaromatische oder heteroaromatische Reste bedeuten.

Die Reste T können auch durch Fluor, Chlor, Brom, Cyan, Hydroxy oder Nitro substituierte Ringsysteme sein. Bevorzugte Reste T sind:

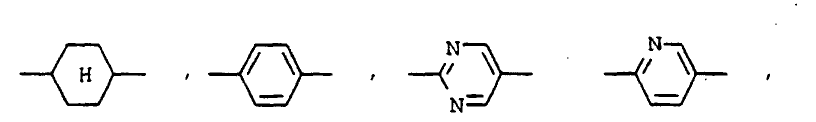

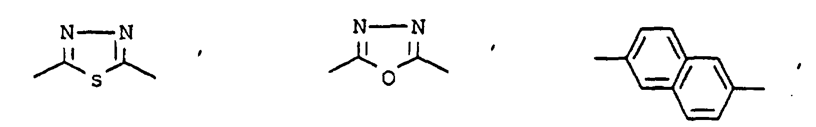

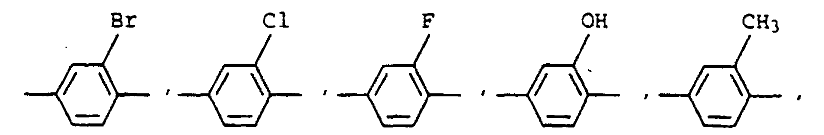

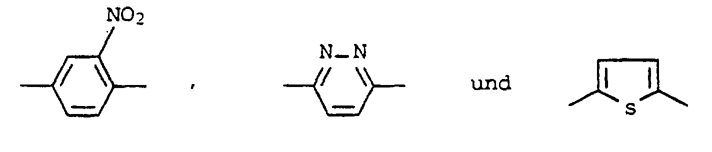

Besonders bevorzugt sind die folgenden mesogenen Gruppen M¹:

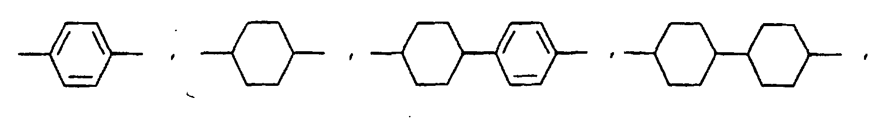

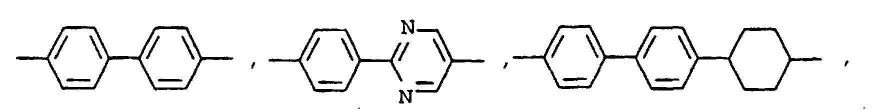

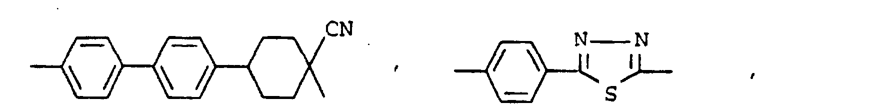

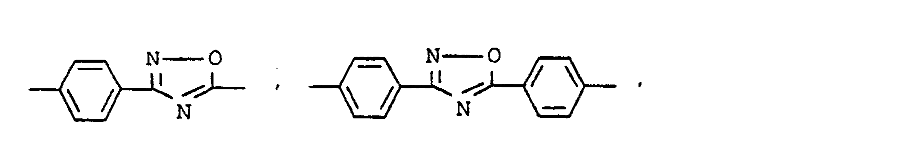

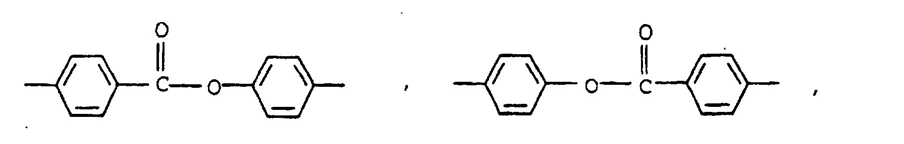

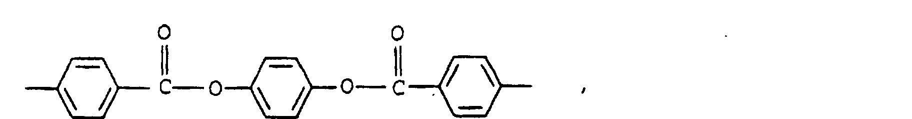

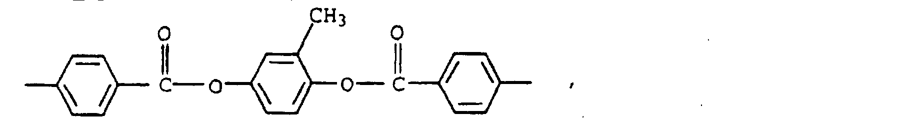

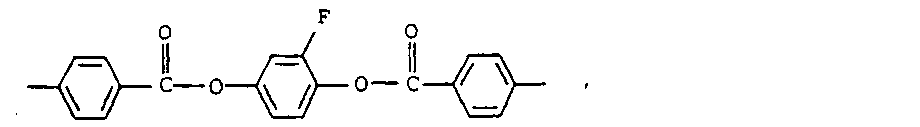

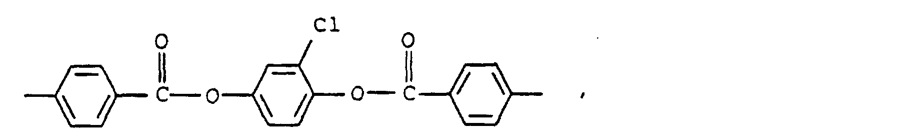

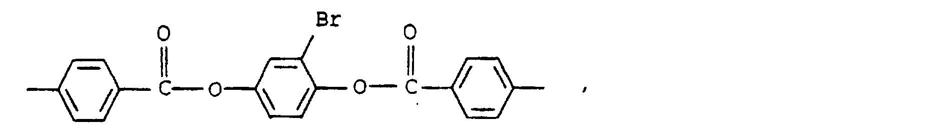

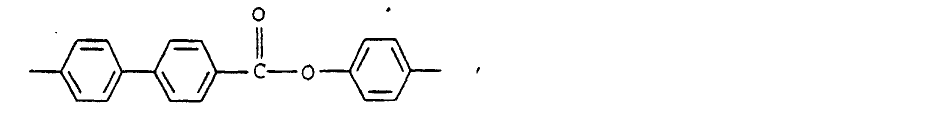

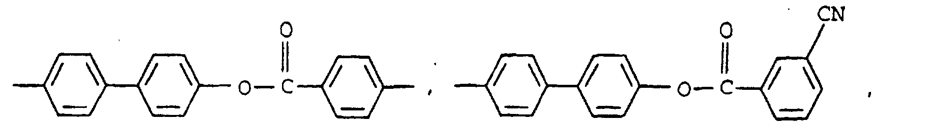

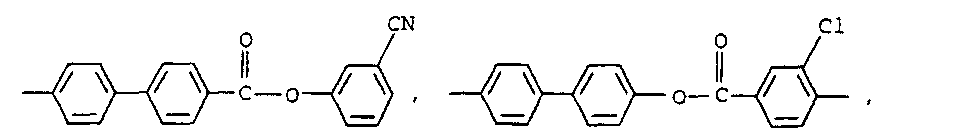

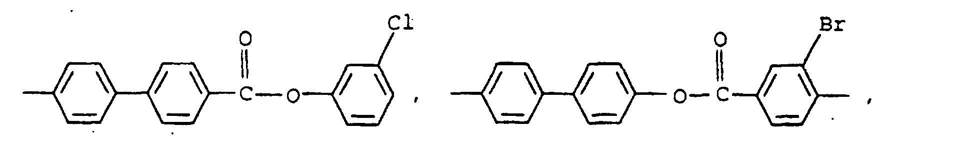

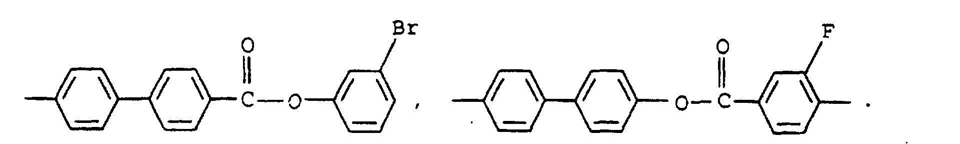

Von den chiralen Resten X der Verbindungen der allgemeinen Formel I sind u.a. aufgrund der Verfügbarkeit insbesondere solche bevorzugt, die sich von Zuckern, Binaphthyl- oder Biphenyl-derivaten sowie optisch aktiven Glykolen, Dialkoholen oder Aminosäuren ableiten. Bei den Zuckern sind insbesondere Pentosen und Hexosen und davon abgeleitete Derivate zu nennen.

Beispiele für Reste X sind die folgenden Strukturen, wobei die endständigen Striche jeweils die freien Valenzen bedeuten.

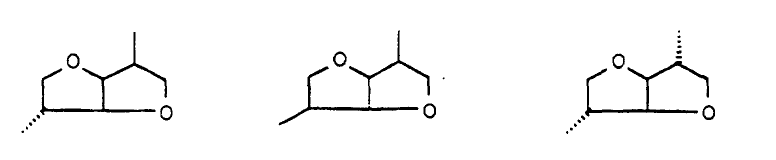

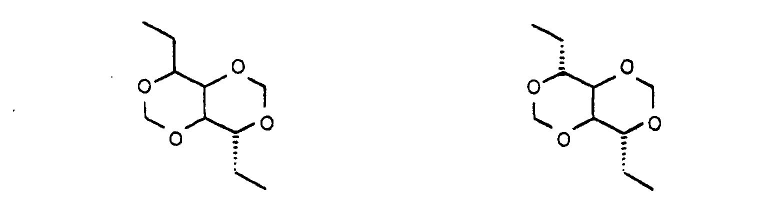

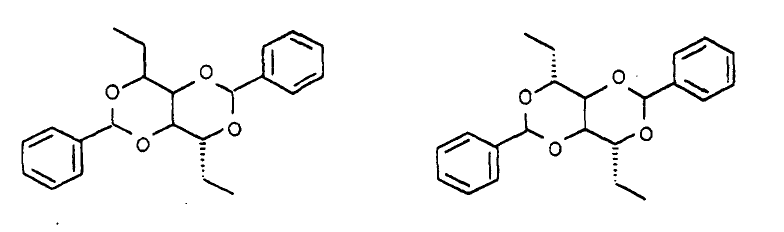

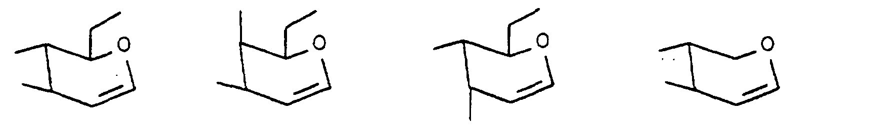

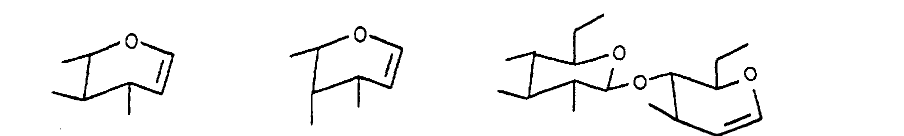

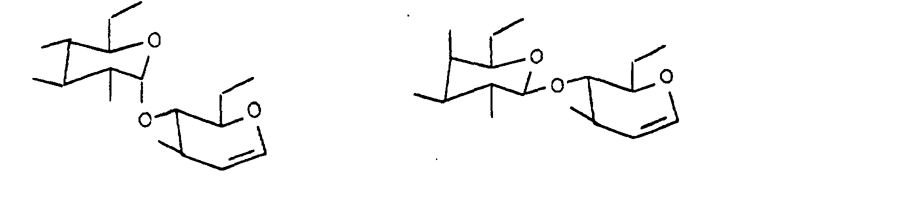

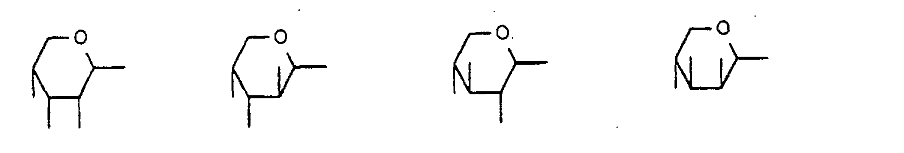

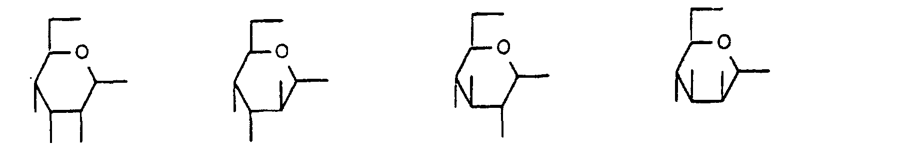

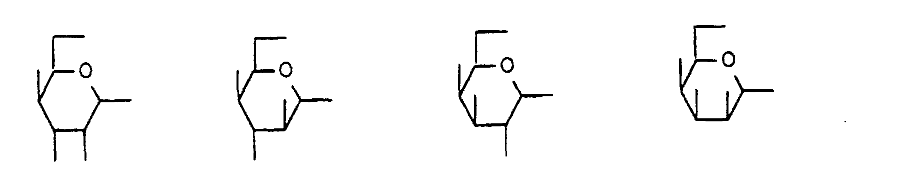

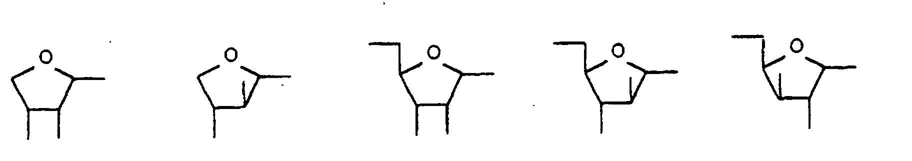

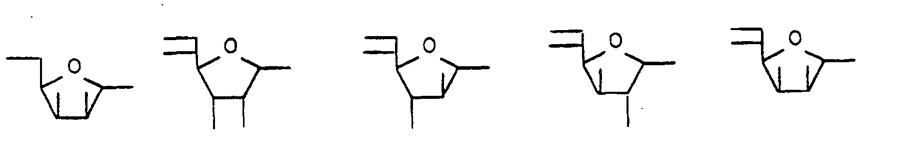

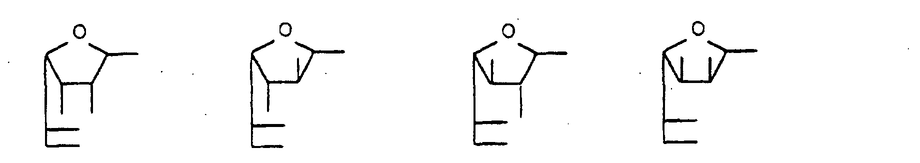

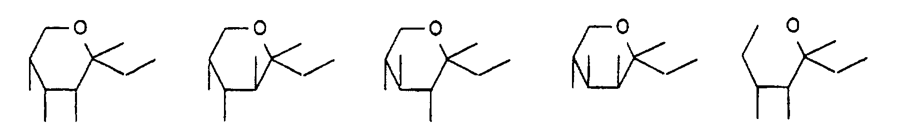

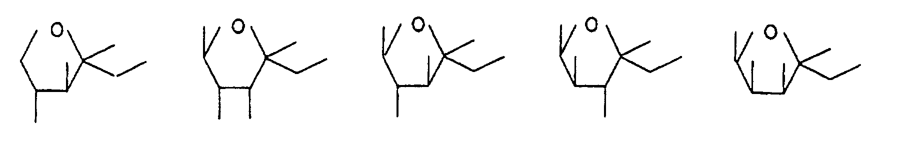

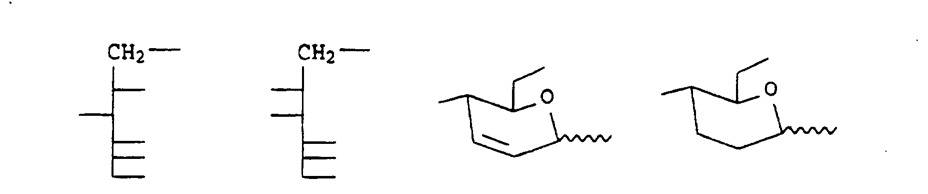

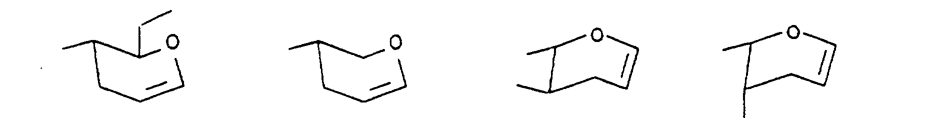

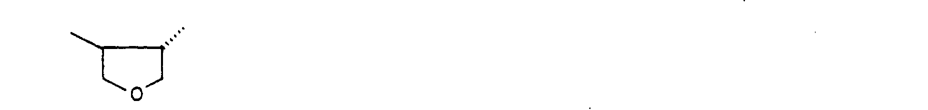

Besonders bevorzugt sind 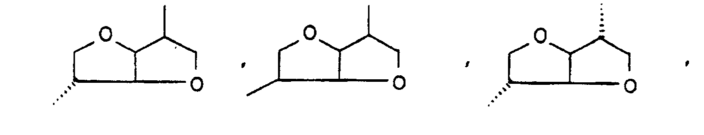 und

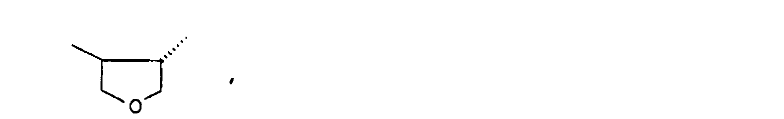

Weiterhin sind auch chirale Gruppen geeignet, die folgende Strukturen aufweisen:

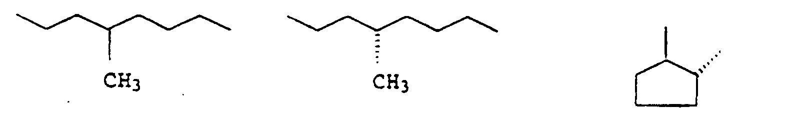

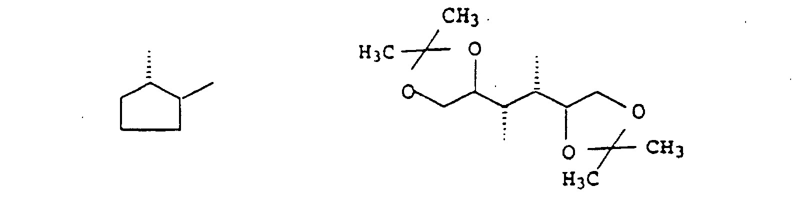

Weitere Beispiele sind in der Schrift EP-A 0 739 403 aufgeführt.

R kann neben Wasserstoff Methyl, Ethyl, n-Propyl, iso-Propyl, n-Butyl, iso-Butyl, sec.-Butyl und tert.-Butyl bedeuten.

n ist bevorzugt 2.

Von den unter b) genannten achiralen flüssigkristallinen polymerisierbaren Monomeren eignen sich für die cholesterisch-flüssigkristalline Zusammensetzung besonders solche der allgemeinen Formel II

Z²―Y⁴―A²―Y⁵―M²―Y⁶―A³―Y⁷―Z³ (II)

in der die Variablen die folgende Bedeutung haben:
- Z²,Z³: polymerisierbare Gruppen oder Reste, die eine polymerisierbare Gruppe enthalten
- Y⁴,Y⁵,Y⁶,Y⁷: chemische Bindungen, Sauerstoff, Schwefel,

―CO―O―,

―O―CO―,

―O―CO―O―,

―CO―N(R)―

oder

―N(R)―CO―,

Dabei gelten für die polymerisierbaren Gruppen, die Brückenglieder Y⁴ bis Y⁷, die Spacer und die mesogene Gruppe die gleichen Bevorzugungen wie für die entsprechenden Variablen der allgemeinen Formel I.

Neben einem achiralen flüssigkristallinen Monomeren enthält die unter b) genannte cholesterisch-flüssigkristalline Zusammensetzung eine chirale Verbindung.

Bevorzugte chirale Verbindungen sind solche der Formel Ia 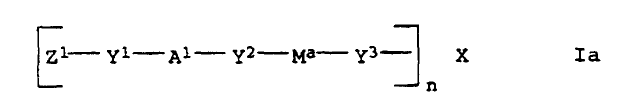 in der Z¹, Y¹, Y², Y³, A¹, X und n die obengenannten Bedeutung haben und M^{a} ein zweiwertiger Rest ist, der mindestens ein hetero-oder isocyclisches Ringsystem enthält.

Der Molekülteil M^{a} ähnelt dabei den beschriebenen mesogenen Gruppen, da auf diese Weise eine besonders gute Kompatibilität mit der flüssigkristallinen Verbindung erreicht wird. M^{a} muß jedoch nicht eigentlich mesogen sein, da die Verbindung Ia lediglich durch ihre chirale Struktur eine entsprechende Verdrillung der flüssigkristallinen Phase bewirken soll. Bevorzugte Ringsysteme, die in M^{a} enthalten sind, sind die oben erwähnten Strukturen T.

Die polymerisierbare Mischung kann auf zwei Arten zu Pigmentpartikeln definierter Struktur verarbeitet werden. Entweder wird die Mischung auf eine mit Vertiefungen versehene Oberfläche aufgetragen und dann polymerisiert oder die Formgebung erfolgt durch ein Druckverfahren, indem man die Mischung auf eine glatte Oberfläche aufdruckt und dann polymerisiert.

Für den letzteren Fall sind verschiedene Druckverfahren geeignet, die einen Farbauftrag in der für das Pigment gewünschten Form und Größe ermöglichen. In Betracht kommen z.B. Offsetdruck, Siebdruck, Hochdruck, Tiefdruck und Flexodruck. Wichtig ist dabei, daß durch geeignete Hilfsmittel die Viskosität so eingestellt wird, daß die Mischung verdruckbar ist ohne zu verlaufen. Für den Fall der cholesterisch-flüssigkristallinen Pigmente ist außerdem zu beachten, daß durch die Hilfsmittel die flüssigkristalline Struktur nicht beeinträchtigt wird und eine spontane Orientierung der Flüssigkristalle auf der Oberfläche möglich ist. Geeignete Hilfsmittel werden in der älteren deutschen Patentanmeldung 19532419.6 genannt.

Unter einer glatten Oberfläche ist dabei eine Oberfläche zu verstehen, welche keine Vertiefungen in der Größenordnung der herzustellenden Pigmentpartikel aufweist und nicht saugfähig ist. Geeignet sind z.B. Kunststoffolien oder Metallbleche.

Zur Herstellung von Pigmentpartikeln durch Auftrag einer polymerisierbaren Mischung auf eine mit Vertiefungen versehene Oberfläche eignen sich als Oberfläche besonders Folien, insbesondere Kunststoffolien, da diese leicht in der gewünschten Weise strukturiert werden können. Als Methoden der Strukturierung, d.h. der Erzeugung der Vertiefungen eignen sich z.B. die bekannten Methoden der Druckplattenherstellung.

Die Vertiefungen können sich auf einer ebenen Oberfläche befinden, sie können sich aber vorzugsweise auch auf der Oberfläche einer drehbaren Walze befinden. Auf diese weise lassen sich die Pigmentpartikel in einem kontinuierlichen Verfahren erzeugen. Ein bevorzugtes verfahren zur Herstellung von Pigmentpartikeln ist dadurch gekennzeichnet, daß man die polymerisierbare Mischung kontinuierlich in auf der Oberfläche einer rotierenden Walze oder eines Rollbandes befindliche Vertiefungen einbringt, durch Belichtung zur Polymerisation bringt und anschließend durch eine Saug -oder Bürsteinrichtung von der Oberfläche der Walze oder des Rollbandes entfernt. Dabei ist die Dimension der Walze und deren Umlaufgeschwindigkeit so zu wählen, daß die flüssig aufgetragene polymerisierbare Mischung bis zum abschließenden Saug- oder Bürstschritt ausreichend durchgehärtet ist. Dies wird natürlich auch z.B. durch die Belichtungsintensität, die Belichtungstrecke sowie die Temperatur beeinflußt. Um einen guten Durchsatz und eine schnelle Polymerisationsgeschwindigkeit zu erreichen, ist es oft vorteilhaft, die Polymerisation bei höheren Temperaturen, z.B. bei 30 bis 150°C, besonders 50 bis 100°C vorzunehmen. Das Verfahren läßt sich aber auch bei anderen Temperaturen durchführen, wobei die Umgebungstemperaturin der Regel hinreichend geeignet ist.

Die Belichtungsquelle hängt von der Art der polymerisierbaren Gruppen sowie des möglicherweise verwendeten Photoinitiators ab. Geeignet sind alle in der Kunststofftechnik verwendbare Belichtungsarten.

Außer durch Belichtung kann die Polymerisation der polymerisierbaren Mischung auch durch Elektronenstrahlen oder, je nach polymerisierbaren Gruppen, auch thermisch herbeigeführt werden.

Die nach dem erfindungsgemäßen Verfahren hergestellten Pigmentpartikel können verschiedene Formen und Größen aufweisen. Besonders für Pigmente, deren Farbeindruck auf Interferenzeffekten beruht, ist eine plättchenförmige Struktur vorteilhaft. Bei diesen Pigmenten ist der Farbeindruck vom Betrachtungswinkel abhängig. Die plättchenförmige Struktur ermöglicht eine gleichförmige Anordnung der Pigmentpartikel in der Farbschicht, wodurch eine gleichartige Reflexion vieler Pigmentpartikel und damit ein homogener Farbeindruck entsteht.

Ein besonderer Vorteil des erfindungsgemaßen Verfahrens liegt in der Möglichkeit, Pigmentplättchen identischer Form und Größe herzustellen. Durch die identische Form zeigen die erfindungsgemäßen Pigmente, besonders die Interferenzpigmente, eine besondere Brillanz des Farbeindrucks.

Die erfindungsgemäßen Pigmente eignen sich als farbgebende Bestandteile von Überzugsmitteln wie Druckfarben, Dispersionsfarben und Lacken. Solche Überzugsmittel, können weitere übliche Zusatzstoffe enthalten. Geeignete Zusatzstoffe sind z.B. in der älteren deutschen Patentanmeldung 19532419.6 genannt, auf die hier ausdrücklich Bezug genommen wird. Besonders eignen sich Lacke mit den erfindungsgemäßen Pigmenten zum Lackieren von Gebrauchsgegenständen, insbesondere von Fahrzeugen wie Autos, Motorräder usw.

Eine bevorzugte Vorrichtung zur Herstellung von Pigmentpartikeln enthält
- eine rotierende Walze oder ein Rollband mit eine Oberfläche, welche Vertiefungen in der Form der gewünschten Pigmentpartikel enthält,
- eine Einrichtung zum Auftragen einer polymerisierbaren Mischung, welche einen Farbstoff oder ein Interferenzfarbmittel enthält, auf die Walze oder das Rollband,
- eine Einrichtung zur Belichtung der polymerisierbaren Mischung,
- eine Einrichtung zum Entfernen der polymerisierten Pigmentpartikel aus den Vertiefungen der Walze oder des Rollbandes und zum Sammeln der Pigmentpartikel.

## Patentansprüche

1. Verfahren zur Herstellung von Pigmentpartikeln, **dadurch gekennzeichnet, daß** man eine polymerisierbare Mischung, welche einen Farbstoff und/oder ein Interferenzfarbmittel enthält, entweder auf eine mit Vertiefungen in der Form der gewünschten Pigmentpartikel versehene Oberfläche aufträgt, die Mischung zur Polymerisation bringt und anschließend die polymerisierten Pigmentpartikel aus den Vertiefungen entfernt, oder auf eine glatte Oberfläche in der Form der gewünschten Pigmentpartikel, wobei diese Form in bekannter Weise durch ein Druckverfahren vorgegeben wird, aufträgt, die Mischung zur Polymerisation bringt und anschließend die polymerisierten Pigmentpartikel von der Oberfläche entfernt, ausgenommen die Herstellung von Pigmentpartikeln mit cholesterisch-flüssigkristalliner Ordnungsstruktur durch Offsetdruck.

2. Verfahren nach Anspruch 1, **dadurch gekennzeichnet, daß** die polymerisierbare Mischung als Interferenzfarbmittel eine cholesterisch-flüssigkristalline Zusammensetzung enthält.

3. Verfahren nach Anspruch 2, **dadurch gekennzeichnet, daß** die cholesterisch-flüssigkristalline Zusammensetzung folgende Komponenten enthält:
a) mindestens ein chirales flüssigkristallines polymerisierbares Monomeres oder
b) mindestens ein achirales flüssigkristallines polymerisierbares Monomeres und eine chirale Verbindung.

4. Verfahren nach Anspruch 3, **dadurch gekennzeichnet, daß** die unter a) genannten chiralen flüssigkristallinen polymerisierbaren Monomeren die Struktur der allgemeinen Formel I 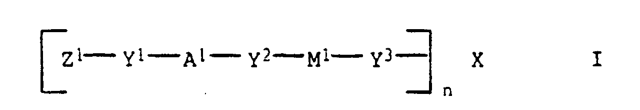 aufweisen, wobei die Variablen die folgende Bedeutung haben:
Z¹ eine polymerisierbare Gruppe oder ein Rest, der eine polymerisierbare Gruppe trägt,
Y¹,Y²,Y³ chemische Bindungen, Sauerstoff, Schwefel,
―CO―O―,
―O―CO―,
―O―CO―O―,
―CO―N(R)―
oder
―N(R)―CO―,
A¹ ein Späcer,
M¹ eine mesogene Gruppe,
x ein n-wertiger chiraler Rest,
R Wasserstoff oder C₁-C₄-Alkyl,
n 1 bis 6
wobei die Reste Z¹, Y¹, Y², Y³, A¹ und M¹, gleich oder verschieden sein können.

5. Verfahren nach Anspruch 3, **dadurch gekennzeichnet, daß** die unter b) genannten achiralen flüssigkristallinen polymerisierbaren Monomeren die Struktur der allgemeinen Formel II
Z²―Y⁴―A²―Y⁵―M²―Y⁶―A³―Y⁷―Z³ (II)
aufweisen, in der die Variablen die folgende Bedeutung haben:
Z²,Z³ polymerisierbare Gruppen oder Reste, die eine polymerisierbare Gruppe enthalten
Y⁴,Y⁵, Y⁶, Y⁷ chemische Bindungen, Sauerstoff, Schwefel,
―CO―O―,
―O―CO―,
―O―CO―O―,
―CO―N(R)―
oder
―N(R)―CO―,
A², A³ Spacer und
M² eine mesogene Gruppe.

6. Verfahren nach Anspruch 3, **dadurch gekennzeichnet, daß** die unter b) genannten chiralen Verbindungen der allgemeinen Formel Ia 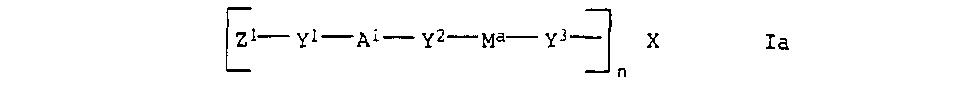 entsprechen, in denen Z¹, Y¹, Y², Y³, A¹, X und n die oben genannte Bedeutung haben und M^{a} ein zweiwertiger Rest ist, der mindestens ein hetero-oder isocyclisches Ringsystem enthält.

7. Verfahren nach den Ansprüchen 1 bis 6, **dadurch gekennzeichnet, daß** die mit Vertiefungen versehene Oberfläche eine Folie ist.

8. Verfahren nach den Ansprüchen 1 bis 6, **dadurch gekennzeichnet, daß** sich die Vertiefungen auf der Oberfläche einer drehbaren Walze befinden.

9. Verfahren nach den Ansprüchen 1 bis 8, **dadurch gekennzeichnet, daß** die polymerisierbare Mischung durch Licht zur Polymerisation gebracht wird.

10. Verfahren nach den Ansprüchen 1 bis 9, **dadurch gekennzeichnet, daß** man die polymerisierbare Mischung kontinuierlich in auf der Oberfläche einer rotierenden Walze oder eines Rollbandes befindliche Vertiefungen einbringt, durch Belichtung zur Polymerisation bringt und anschließend durch eine Saug- oder Bürsteinrichtung von der Oberfläche der Walze oder des Rollbandes entfernt.

11. Verfahren nach den Ansprüchen 1 bis 10, **dadurch gekennzeichnet, daß** die Pigmentpartikel eine plättchenförmige Struktur aufweisen.

12. Pigmentpartikel, erhältlich nach einem Verfahren gemäß den Ansprüchen 1 bis 11.

13. Überzugsmittel, enthaltend Pigmentpartikel gemäß Anspruch 12.

14. Vorrichtung zur Herstellung von Pigmentpartikeln, enthaltend
- eine rotierende walze oder ein Rollband mit eine Oberfläche, welche Vertiefungen in der Form der gewünschten Pigmentpartikel enthält,
- eine Einrichtung zum Auftragen einer polymerisierbaren Mischung, welche einen Farbstoff und/oder ein Interferenzfarbmittel enthält, auf die Walze oder das Rollband,
- eine Einrichtung zur Belichtung der polymerisierbaren Mischung,
- eine Einrichtung zum Entfernen der polymerisierten Pigmentpartikel aus den Vertiefungen der Walze oder des Rollbandes und zum Sammeln der Pigmentpartikel.

## Revendications

1. Procédé de préparation de particules de pigment, **caractérisé en ce qu'**un mélange polymérisable qui contient un colorant et/ou un colorant par interférence, est appliqué sur une surface munie de creux de la forme des particules de pigment souhaitées, le mélange est amené à la polymérisation et ensuite les particules de pigment polymérisées sont retirées des creux, ou bien il est appliqué sur une surface lisse de la forme des particules de pigment souhaitées, cette forme étant prédéfinie d'une manière connue au moyen d'un procédé d'impression, le mélange est amené à la polymérisation et les particules de pigment polymérisés sont ensuite retirés de la surface, la préparation de particules de pigment avec une structure ordonnée de cristal liquide cholestérique au moyen d'une impression offset étant exclue.

2. Procédé selon la revendication 1, **caractérisé en ce que** le mélange polymérisable contient en tant que colorant par interférence une composition de cristal liquide cholestérique.

3. Procédé selon la revendication 2, **caractérisé en ce que** la composition de cristal liquide cholestérique comprend les composants suivants :
a) au moins un monomère polymérisable de cristal liquide chiral ou
b) au moins un monomère polymérisable de cristal liquide achiral et un composé chiral.

4. Procédé selon la revendication 3, **caractérisé en ce que** les monomères polymérisables de cristal liquide chiral cités sous a) présentent la structure de formule générale I: 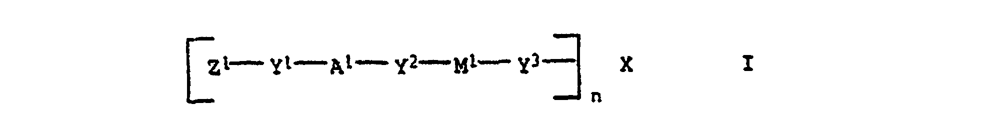 où les variables prennent la signification suivante :
Z¹ représente un groupe polymérisable ou un résidu qui porte un groupe polymérisable,
Y¹, Y², Y³ représentent des liaisons chimiques, un atome d'oxygène, de soufre,
―CO―O―,
―O―CO―,
―O―CO―O―
―CO―N(R)―
ou
―N(R)―CO―,
A¹ représente un groupe intercalaire,
M¹ représente un groupe mésogène,
x représente un résidu chiral de valence n,
R représente un atome d'hydrogène ou un groupe alkyle en C₁ à C₄,
n vaut de 1 à 6
où les résidus Z², Y¹, Y², Y³, A¹ et M¹ peuvent être identiques ou différents.

5. Procédé selon la revendication 3, **caractérisé en ce que** les monomères polymérisables de cristal liquide achiral cités sous b) présentent la structure de formule générale II
Z²―Y⁴―A²―Y⁵―M²―Y⁶―A³―Y⁷―Z³ (II)
dans laquelle les variables prennent la signification suivante:
Z², Z³ représentent les groupes polymérisables ou des résidus qui portent un groupe polymérisable
Y⁴, Y⁵, Y⁶, Y⁷ représentent des liaisons chimiques, un atome d'oxygène, un atome de soufre,
―CO―O―,
―O―CO―,
―O―CO―O―,
―CO―N(R)―
ou
―N(R)―CO―,
A², A³ représentent des groupes intercalaires et
M² représente un groupe mésogène.

6. Procédé selon la revendication 3, **caractérisé en ce que** les composés chiraux cités sous b) correspondent à la formule générale Ia 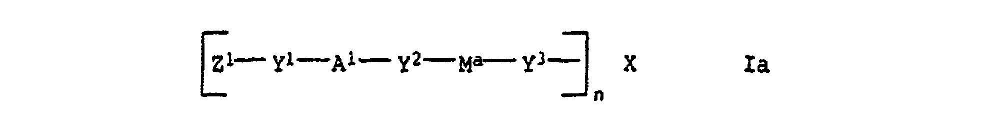 dans lesquels Z¹, Y¹, Y², Y³, A¹, X et n prennent la signification précitée et M^{a} est un résidu bivalent qui contient au moins un système à cycle hétéro- ou isocyclique.

7. Procédé selon les revendications 1 à 6, **caractérisé en ce que** la surface munie de creux est une feuille.

8. Procédé selon les revendications 1 à 6, **caractérisé en ce que** les creux se trouvent sur la surface d'un cylindre rotatif.

9. Procédé selon les revendications 1 à 8, **caractérisé en ce que** le mélange polymérisable est amené à la polymérisation au moyen de la lumière.

10. Procédé selon les revendications 1 à 9, **caractérisé en ce que** l'on introduit en continu le mélange polymérisable dans des creux se trouvant sur la surface d'un cylindre en rotation ou d'une bande de rouleau, on l'amène à la polymérisation par une exposition à la lumière puis on le retire de la surface du cylindre ou de la bande de rouleau au moyen d'un dispositif d'aspiration ou à brosse.

11. Procédé selon les revendications 1 à 10, **caractérisé en ce que** les particules de pigment présentent une structure de forme plaquettaire.

12. Particules de pigment pouvant être obtenues en suivant un procédé selon les revendications 1 à 11.

13. Revêtements contenant des particules de pigment selon la revendication 12.

14. Appareil pour la préparation de particules de pigment, contenant:
- un cylindre tournant ou une bande de rouleau ayant une surface, laquelle contient des creux de la forme des particules de pigment souhaitées,
- un dispositif pour appliquer un mélange polymérisable, qui contient un colorant et/ou un colorant par interférence, sur le cylindre ou sur la bande de rouleau.
- un dispositif pour exposer à la lumière le mélange polymérisable.
- un dispositif pour retirer les particules de pigment polymérisées des creux du cylindre ou de la bande de rouleau et pour recueillir les particules de pigment

## Claims

1. A process for producing pigment particles, which comprises applying a polymerizable mixture containing a dye or an interference colorant either to a surface provided with indentations in the form of the desired pigment particles, polymerizing the mixture and then removing the polymerized pigment particles from the indentations, or to a smooth surface in the form of the desired pigment particles, this form being predetermined in a known manner by means of a printing technique, polymerizing the mixture and then removing the polymerized pigment particles from the surface, with the exception of the production of pigment particles having a cholesteric liquid-crystalline order structure by offset printing.

2. A process as claimed in claim 1, wherein the polymerizable mixture comprises a cholesteric liquid-crystalline composition as interference colorant.

3. A process as claimed in claim 2, wherein the cholesteric liquid-crystalline composition comprises the following components:
a) at least one chiral liquid-crystalline polymerizable monomer, or
b) at least one achiral liquid-crystalline polymerizable monomer and a chiral compound.

4. A process as claimed in claim 3, wherein the chiral liquid-crystalline polymerizable monomers a) have the structure of the general formula I 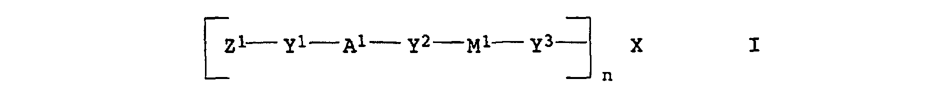 where:
Z¹ is a polymerizable group or a radical which carries a polymerizable group,
Y¹,Y² and Y³ are chemical bonds, oxygen, sulfur,
―CO―O―,
―O―CO―,
―O―CO―O―,
―CO―N(R)―
or
―N(R)―CO― ,
A¹ is a spacer,
M¹ is a mesogenic group,
X is an n-valent chiral radical,
R is hydrogen or C₁-C₄-alkyl,
n is 1 to 6,
and Z¹, Y¹, Y², Y³, A¹ and M¹ can be identical or different.

5. A process as claimed in claim 3, wherein the achiral liquid-crystalline polymerizable monomers b) have the structure of the general formula II
Z²―Y⁴―A²―Y⁵―M²―Y⁶―A³―Y⁷―Z³ (II)
where
Z² and Z³ are polymerizable groups or contain a polymerizable group,
Y⁴,Y⁵,Y⁶ and Y⁷ are chemical bonds, oxygen, sulfur,
―CO―O―,
―O―CO―,
―O―CO―O―,
―CO―N(R)―
or
―N(R)―CO―,
A² and A³ are spacers, and
M² is a mesogenic group.

6. A process as claimed in claim 3, wherein the chiral compounds b) are of the general formula Ia 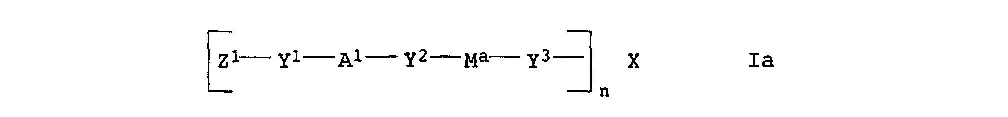 where Z¹, Y¹, Y², Y³, A¹, X and n are as defined above and M^{a} is a divalent radical containing at least one heterocyclic or isocyclic ring system.

7. A process as claimed in any of claims 1 to 6, wherein the surface provided with indentations is a film.

8. A process as claimed in any of claims 1 to 6, wherein the indentations are on the surface of a rotatable roller.

9. A process as claimed in any of claims 1 to 8, wherein the polymerizable mixture is polymerized by means of light.

10. A process as claimed in any of claims 1 to 9, wherein the polymerizable mixture is introduced continuously into indentations on the surface of a rotating roller or of a roller belt, polymerized by exposure to light and then removed from the surface of the roller or the roller belt by means of a suction or brushing device.

11. A process as claimed in any of claims 1 to 10, wherein the pigment particles have a plateletlike structure.

12. Pigment particles obtainable by a process as claimed in any of claims 1 to 11.

13. A coating composition comprising pigment particles as claimed in claim 12.

14. A device for producing pigment particles, comprising
- a rotating roller or a roller belt with a surface containing indentations in the form of the desired pigment particles,
- a device for applying a polymerizable mixture containing a dye or an interference colorant to the roller or the roller belt,
- a device for exposing the polymerizable mixture to light, and
- a device for removing the polymerized pigment particles from the indentations in the roller or roller belt and for collecting the pigment particles.
